# EUROPEAN PATENT APPLICATION

(11) **EP 4 804 629 A1**
(43) Date of publication of application: **09.09.2026**
(21) Application number: 24899597.9
(22) Date of filing: 18.11.2024
(51) Int. Cl.: H04W 48/04

(54) **ACCESS METHOD AND APPARATUS**

(30) Priority: 04.12.2023 CN 202311656229
(71) Applicant: Huawei Technologies Co., Ltd., Shenzhen, Guangdong 518129 (CN)
(72) Inventor: ZHENG, Haina, Shenzhen, Guangdong 518129 (CN); YAO, Chuting, Shenzhen, Guangdong 518129 (CN); XUE, Lixia, Shenzhen, Guangdong 518129 (CN); FAN, Liangliang, Shenzhen, Guangdong 518129 (CN); LI, Qiang, Shenzhen, Guangdong 518129 (CN)
(74) Representative: Pfenning, Meinig & Partner mbB
(86) International application number: PCT/CN2024/132627
(87) International publication number: WO 2025/118955

(57) **Abstract**

This application relates to the field of communication technologies, and in particular, to an access method and an apparatus, to reduce power consumption overheads and improve access efficiency when a terminal device accesses an NTN, so as to improve user experience. The method includes: A first communication apparatus (for example, a terminal device) receives first information, where the first information indicates M locations, the M locations correspond to M beams or SSBs, the M beams or SSBs are beams or SSBs in an NTN, and M is an integer greater than or equal to 1; initiates access based on N beams or SSBs in the M beams or SSBs, where locations corresponding to the N beams or SSBs and a location of the first communication apparatus satisfy a specific location relationship, the N beams or SSBs belong to the M beams or SSBs, N is an integer greater than or equal to 1, and N is less than or equal to M.

## Description

### CROSS-REFERENCE TO RELATED APPLICATIONS

This application claims priority to Chinese Patent Application No. 202311656229.6, filed with the China National Intellectual Property Administration on December 4, 2023 and entitled "ACCESS METHOD AND APPARATUS", which is incorporated herein by reference in its entirety.

### TECHNICAL FIELD

This application relates to the field of communication technologies, and in particular, to an access method and an apparatus.

### BACKGROUND

A non-terrestrial network (non-terrestrial network, NTN) has advantages of a wide coverage area, a long communication distance, high reliability, high flexibility, a high throughput, and being free from impact of geographical environments, climate conditions, and natural disasters, and has been widely used in fields such as aviation communication, maritime communication, and military communication. The NTN is introduced into a mobile communication system, for example, a new radio (new radio, NR) system, to provide communication services for areas that are difficult to be covered by a terrestrial network (terrestrial network, TN), such as deserts, oceans, or forests, enhance communication reliability, for example, provide communication services with higher stability and higher quality for trains, airplanes, and users on such means of transportation, and provide more data transmission resources, for example, support connections of more terminal devices.

In the NR system, an entire cell may be covered through beam sweeping (beam sweeping). For example, a network device may send beams in only one or more directions at a moment, and send beams in different directions at a plurality of moments to cover directions needed in the entire cell. The terminal device may determine signal strength of a synchronization signal/physical broadcast channel block (synchronization signal/PBCH block, SSB) on each beam by searching for the SSB carried on each beam, and select an optimal beam serving the terminal device to initiate access. However, a non-terrestrial network device such as a satellite or a high-altitude platform of the NTN features a large coverage area and a large quantity of sent beams. If the existing beam searching manner is still used to initiate access, power consumption overheads for blind detection by the terminal device in each direction are high, and access time is long, affecting user experience.

### SUMMARY

This application provides an access method and an apparatus, to reduce power consumption overheads and improve access efficiency when a terminal device accesses an NTN, so as to improve user experience.

According to a first aspect, an embodiment of this application provides an access method. The method may be performed by a first communication apparatus. The method includes: receiving first information, where the first information indicates M locations, the M locations correspond to M beams, the M beams are beams in an NTN, and M is an integer greater than or equal to 1; and initiating access based on N beams in the M beams, where locations corresponding to the N beams and a location of the first communication apparatus satisfy a specific location relationship, the N beams belong to the M beams, N is an integer greater than or equal to 1, and N is less than or equal to M.

In the foregoing access method, the first communication apparatus may be a terminal device, a component (for example, a processor, a chip, or a chip system) of the terminal device, an apparatus that can be used in conjunction with the terminal device, or the like.

According to the foregoing method, when accessing the NTN, the first communication apparatus may select, based on a location corresponding to a beam in an NTN cell and the location of the first communication apparatus, some beams that are in the NTN cell and whose corresponding locations satisfy a specific location relationship with the location of the first communication apparatus, to perform detection; and select an optimal beam to initiate access, so that blind detection on all beams in the NTN cell by the terminal device can be avoided. In this way, the terminal device can quickly access the NTN, blind detection overheads of the terminal are reduced, and access power consumption and access time are reduced, to improve user experience.

In a possible design, the location relationship is that a distance between a location corresponding to a beam and the location of the first communication apparatus is less than or equal to a first distance threshold; or distances between the locations corresponding to the N beams and the location of the first communication apparatus are N shortest distances in distances between the locations corresponding to the M beams and the location of the first communication apparatus.

According to the foregoing design, the first communication apparatus may select N beams that are closest to the first communication apparatus or whose distances to the first communication apparatus are less than a specific distance threshold to initiate access. This helps ensure that the first communication apparatus preferentially detects N beams with optimal signal quality in the M beams to initiate access, and ensures communication quality after the first communication apparatus accesses the NTN.

In a possible design, the first information includes information about the M locations; or the first information includes a location of a reference point, and information about angles and distances of the M locations relative to the reference point; or the first information includes information about a pitch value and a horizontal value that correspond to the M locations; or the first information includes a location of a reference point, P distances, and M angles, any one of the P distances is associated with at least one of the M angles, an angle in the M angles and a distance associated with the angle are an angle and a distance of one of the M locations relative to the reference point, P is an integer greater than or equal to 1, and P is less than or equal to M.

Optionally, the first information may further indicate an ephemeris of an NTN network device corresponding to the M beams, and is used by the first communication apparatus to determine a location of the NTN network device.

According to the foregoing design, a plurality of location indication manners are supported. This helps satisfy a requirement for indicating a location corresponding to a beam in different cell modes (for example, a terrestrial mobile cell or a terrestrial fixed cell). In addition, angles may be further clustered based on distances. For example, the angles and the distances of the M locations relative to the reference point are indicated by using the P distances and the M angles. In this way, signaling overheads can be further reduced.

In a possible design, the initiating access based on the N beams in the M beams includes: detecting one or more of the N beams to determine a target beam or SSB; and initiating access based on the target beam or SSB.

Optionally, the first information further indicates a mapping relationship between an SSB and a random access channel occasion (RACH occasion, RO), and the initiating access based on the target beam may include: determining, based on the mapping relationship between the SSB and the RO, a target RO that has a mapping relationship with an SSB carried on the target beam; and initiating access to the target beam based on the target RO, where the RACH represents a random access channel (random access channel, RACH).

According to the foregoing design, the first communication apparatus may select, by detecting signal strength of SSBs on some or all of the N selected beams, an optimal beam that serves the first communication apparatus, and initiate access. This helps reduce a quantity of beams detected when the first communication apparatus accesses the NTN, and improve access efficiency.

In a possible design, the first information further indicates detection time of the M beams, and the detecting one or more of the N beams to determine the target beam includes: detecting one or more of the N beams based on detection time of the N beams, to determine the target beam.

According to the foregoing design, the first communication apparatus may detect one or more of the N beams based on the detection time of the N beams, to avoid blind beam search, and help further reduce time and power consumption overheads for accessing the NTN.

In a possible design, the first information further indicates an ephemeris of an NTN network device corresponding to the M beams, and the method further includes: adjusting a radiation direction of an antenna of the first communication apparatus based on the ephemeris; and/or sending first prompt information based on the ephemeris, where the first prompt information is used for prompting adjustment of a posture of the first communication apparatus. It may be understood that, when the access method is performed by a chip, a processor, or the like, adjusting the radiation direction of the antenna of the first communication apparatus may be: sending instructions to an antenna module by the chip or the processor, to instruct the antenna module to adjust the radiation direction of the antenna.

According to the foregoing design, before detecting a beam, the first communication apparatus may further adjust the radiation direction of the antenna based on the location of the first communication apparatus and the ephemeris of the NTN network device, or send prompt information such as an image-text or a voice to prompt a user to adjust the posture of the first communication apparatus, so that the antenna of the first communication apparatus can be aligned with the NTN network device, to improve an antenna receiving gain of the first communication apparatus as much as possible.

In a possible design, the first information further indicates an update interval of the first information, and N is determined based on the update interval of the first information.

According to the foregoing design, the quantity N of selected beams may be determined based on a mapping relationship between the update interval and a quantity of beams. The mapping relationship may be represented by using a formula, or may be represented by using a table.

Optionally, the update interval is positively correlated with a value of N, or in other words, N is inversely proportional to an update time frequency of the first information, to ensure that a range of distances between the N selected beams and the first communication apparatus is within a beam distance accuracy error range.

In a possible design, the receiving the first information includes receiving the first information from a second communication apparatus, where the second communication apparatus may be a TN network device or a TN server.

According to the foregoing design, when the first communication apparatus camps on a TN cell, the TN network device or the TN server may indicate, to the first communication apparatus, information such as a location corresponding to a beam in the NTN cell. This helps improve access efficiency of initial access performed by searching for the NTN cell when the first communication apparatus is located in or enters a geographical area without cellular network coverage.

In a possible design, the first information further indicates a cell mode of an NTN cell corresponding to the M beams.

According to the foregoing design, the first communication apparatus obtains the cell mode of the NTN cell, and selects an NTN cell that satisfies a requirement of the first communication apparatus to initiate access.

According to a second aspect, an embodiment of this application provides an access method. The method may be performed by a second communication apparatus. The method includes: sending first information to a first communication apparatus, where the first information indicates M locations, the M locations correspond to M beams, the M beams are beams in an NTN, and M is an integer greater than or equal to 1.

In the foregoing access method, the first communication apparatus may be a terminal device, a component (for example, a processor, a chip, or a chip system) of the terminal device, an apparatus that can be used in conjunction with the terminal device, or the like. The second communication apparatus may be a TN network device or a TN server, a component (for example, a processor, a chip, or a chip system) of the TN network device or the TN server, an apparatus that can be used in conjunction with the TN network device or the TN server, or the like.

In a possible design, the first information is used by the first communication apparatus to initiate access based on N beams in the M beams, where locations corresponding to the N beams and a location of the first communication apparatus satisfy a specific location relationship, the N beams belong to the M beams, N is an integer greater than or equal to 1, and N is less than or equal to M.

In a possible design, the location relationship is that a distance between a location corresponding to a beam and the location of the first communication apparatus is less than or equal to a first distance threshold; or distances between the locations corresponding to the N beams and the location of the first communication apparatus are N shortest distances in distances between the locations corresponding to the M beams and the location of the first communication apparatus.

In a possible design, the first information includes information about the M locations; or the first information includes a location of a reference point, and information about angles and distances of the M locations relative to the reference point; or the first information includes information about a pitch value and a horizontal value that correspond to the M locations; or the first information includes a location of a reference point, P distances, and M angles, any one of the P distances is associated with at least one of the M angles, an angle in the M angles and a distance associated with the angle are an angle and a distance of one of the M locations relative to the reference point, P is an integer greater than or equal to 1, and P is less than or equal to M.

In a possible design, the first information further indicates one or more of detection time of the M beams, an ephemeris of an NTN network device corresponding to the M beams, an update interval of the first information, a mapping relationship between an SSB and a random access channel occasion RO, and a cell mode of an NTN cell corresponding to the M beams.

According to a third aspect, an embodiment of this application provides an access method. The method may be performed by a first communication apparatus. The method includes: receiving first information, where the first information indicates M locations, the M locations correspond to M SSBs, the M SSBs are SSBs in an NTN, and M is an integer greater than or equal to 1; and initiating access based on N SSBs in the M SSBs, where locations corresponding to the N SSBs and a location of the first communication apparatus satisfy a specific location relationship, the N SSBs belong to the M SSBs, N is an integer greater than or equal to 1, and N is less than or equal to M.

In the foregoing access method, the first communication apparatus may be a terminal device, a component (for example, a processor, a chip, or a chip system) of the terminal device, an apparatus that can be used in conjunction with the terminal device, or the like.

In a possible design, the location relationship is that a distance between a location corresponding to an SSB and the location of the first communication apparatus is less than or equal to a first distance threshold; or distances between the locations corresponding to the N SSBs and the location of the first communication apparatus are N shortest distances in distances between the locations corresponding to the M SSBs and the location of the first communication apparatus.

In a possible design, the first information includes information about the M locations; or the first information includes a location of a reference point, and information about angles and distances of the M locations relative to the reference point; or the first information includes information about a pitch value and a horizontal value that correspond to the M locations; or the first information includes a location of a reference point, P distances, and M angles, any one of the P distances is associated with at least one of the M angles, an angle in the M angles and a distance associated with the angle are an angle and a distance of one of the M locations relative to the reference point, P is an integer greater than or equal to 1, and P is less than or equal to M.

In a possible design, the initiating access based on the N SSBs in the M SSBs includes: detecting one or more of the N SSBs to determine a target SSB; and initiating access based on the target SSB.

In a possible design, the first information further indicates detection time of the M SSBs, and the detecting one or more of the N SSBs to determine the target SSB includes: detecting one or more of the N SSBs based on detection time of the N SSBs, to determine the target SSB.

In a possible design, the first information further indicates an ephemeris of an NTN network device corresponding to the M SSBs, and the method further includes: adjusting a radiation direction of an antenna of the first communication apparatus based on the ephemeris; and/or sending first prompt information based on the ephemeris, where the first prompt information is used for prompting adjustment of a posture of the first communication apparatus.

In a possible design, the first information further indicates a mapping relationship between the SSB and an RO, and the initiating access based on the target SSB includes: determining, based on the mapping relationship between the SSB and the RO, a target RO that has a mapping relationship with the target SSB; and initiating access to the target SSB based on the target RO.

In a possible design, the first information further indicates an update interval of the first information, and N is determined based on the update interval of the first information.

In a possible design, the update interval is positively correlated with a value of N.

In a possible design, the first information further indicates a cell mode of an NTN cell corresponding to the M SSBs.

According to a fourth aspect, an embodiment of this application provides an access method. The method may be performed by a second communication apparatus. The method includes: sending first information to a first communication apparatus, where the first information indicates M locations, the M locations correspond to M SSBs, the M SSBs are SSBs in an NTN, and M is an integer greater than or equal to 1.

In the foregoing access method, the first communication apparatus may be a terminal device, a component (for example, a processor, a chip, or a chip system) of the terminal device, an apparatus that can be used in conjunction with the terminal device, or the like. The second communication apparatus may be a TN network device or a TN server, a component (for example, a processor, a chip, or a chip system) of the TN network device or the TN server, an apparatus that can be used in conjunction with the TN network device or the TN server, or the like.

In a possible design, the first information is used by the first communication apparatus to initiate access based on N SSBs in the M SSBs, where locations corresponding to the N SSBs and a location of the first communication apparatus satisfy a specific location relationship, the N SSBs belong to the M SSBs, N is an integer greater than or equal to 1, and N is less than or equal to M.

In a possible design, the location relationship is that a distance between a location corresponding to an SSB and the location of the first communication apparatus is less than or equal to a first distance threshold; or distances between the locations corresponding to the N SSBs and the location of the first communication apparatus are N shortest distances in distances between the locations corresponding to the M SSBs and the location of the first communication apparatus.

In a possible design, the first information includes information about the M locations; or the first information includes a location of a reference point, and information about angles and distances of the M locations relative to the reference point; or the first information includes information about a pitch value and a horizontal value that correspond to the M locations; or the first information includes a location of a reference point, P distances, and M angles, any one of the P distances is associated with at least one of the M angles, an angle in the M angles and a distance associated with the angle are an angle and a distance of one of the M locations relative to the reference point, P is an integer greater than or equal to 1, and P is less than or equal to M.

In a possible design, the first information further indicates one or more of detection time of the M SSBs, an ephemeris of an NTN network device corresponding to the M SSBs, an update interval of the first information, a mapping relationship between the SSB and an RO, and a cell mode of an NTN cell corresponding to the M SSBs.

According to a fifth aspect, an embodiment of this application provides a communication apparatus. The apparatus has a function of implementing the method according to any one of the first aspect to the fourth aspect. The function may be implemented by hardware, or may be implemented by hardware executing corresponding software. The hardware or the software includes one or more modules (or units) corresponding to the foregoing functions, for example, includes a transceiver unit and a processing unit.

In a possible design, the apparatus may be a chip or an integrated circuit.

In a possible design, the apparatus includes a processor, and when executing a computer program or instructions, the processor may implement the method in any one of the first aspect to the fourth aspect.

Optionally, the apparatus further includes a memory. The memory is configured to store the computer program or instructions executed by the processor.

According to a sixth aspect, an embodiment of this application provides a communication apparatus. The communication apparatus includes an interface circuit and a processor, and the processor and the interface circuit are coupled to each other. The processor is configured to implement the method in any one of the first aspect to the fourth aspect by using a logic circuit or executing a computer program or instructions. The interface circuit is configured to receive a signal from a communication apparatus other than the communication apparatus and transmit the signal to the processor, or send a signal from the processor to a communication apparatus other than the communication apparatus. It may be understood that, the interface circuit may be a transceiver, a transceiver machine, a transceiver apparatus, or an input/output interface.

Optionally, the communication apparatus may further include a memory, configured to store a computer program or instructions executed by the processor, input data needed by the processor to run the instructions, or data generated after the processor runs the computer program or the instructions. The memory may be a physically independent unit, or may be coupled to the processor, or the processor includes the memory (that is, the processor and the memory are integrated).

In a possible implementation, the communication apparatus is a chip.

According to a seventh aspect, an embodiment of this application provides a communication system. The communication system includes a first communication apparatus and a second communication apparatus. The first communication apparatus is configured to implement the method according to the first aspect, and the second communication apparatus is configured to implement the method according to the second aspect. Alternatively, the first communication apparatus is configured to implement the method according to the third aspect, and the second communication apparatus is configured to implement the method according to the fourth aspect.

According to an eighth aspect, an embodiment of this application provides a computer-readable storage medium. The computer-readable storage medium stores a computer program or instructions, and when the computer program or the instructions are executed by a processor, the method according to any one of the first aspect to the fourth aspect may be implemented.

According to a ninth aspect, an embodiment of this application further provides a computer program product, including a computer program or instructions, and when the computer program or the instructions are executed by a processor, the method according to any one of the first aspect to the fourth aspect may be implemented.

According to a tenth aspect, an embodiment of this application further provides a chip system. The chip system includes a processor. The processor may be configured to be coupled to a memory. The memory is configured to store a computer program or instructions. When the computer program or the instructions are executed by the processor, the method according to any one of the first aspect to the fourth aspect may be implemented.

For technical effects that can be achieved in the second aspect to the tenth aspect, refer to technical effects that can be achieved in the first aspect. Details are not described herein again.

### BRIEF DESCRIPTION OF DRAWINGS

FIG. 1 is a diagram of an architecture of a communication system according to an embodiment of this application;
FIG. 2A, FIG. 2B, and FIG. 2C are diagrams of communication scenarios according to an embodiment of this application;
FIG. 3 is a diagram 1 of an access method according to an embodiment of this application;
FIG. 4 is a diagram of distribution of cells according to an embodiment of this application;
FIG. 5A is a diagram of locations corresponding to beams according to an embodiment of this application;
FIG. 5B is a diagram of locations corresponding to a first communication apparatus and beams according to an embodiment of this application;
FIG. 6A and FIG. 6B are a diagram of distribution of SSBs in a half-frame according to an embodiment of this application;
FIG. 7 is a diagram of an SSB pattern according to an embodiment of this application;
FIG. 8 is a diagram 2 of an access method according to an embodiment of this application;
FIG. 9 is a diagram 1 of an example of an access procedure according to an embodiment of this application;
FIG. 10 is a diagram 1 of an example of an access procedure according to an embodiment of this application;
FIG. 11 is a diagram 1 of a structure of a communication apparatus according to an embodiment of this application; and
FIG. 12 is a diagram 2 of a structure of a communication apparatus according to an embodiment of this application.

### DESCRIPTION OF EMBODIMENTS

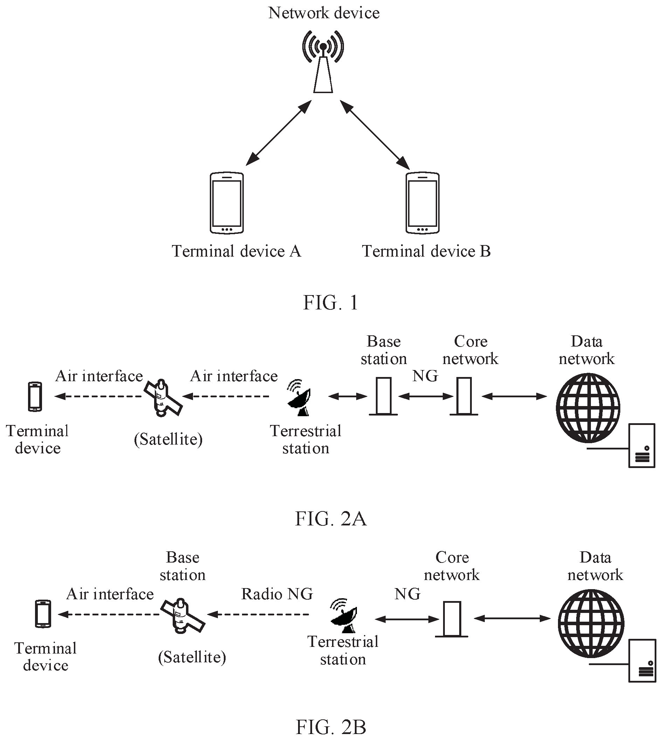

The technical solutions in embodiments of this application may be applied to various communication systems, for example, a 5th generation (5th generation, 5G) communication system, an NTN communication system, a beyond 5G (beyond 5G, B5G) communication system, or a communication system evolved after 5G (for example, a 6th generation (6th generation, 6G) communication system). FIG. 1 is a diagram of an architecture of a communication system according to an embodiment of this application. The communication system includes a network device and a terminal device. For example, there is one network device, and there are two terminal devices (a terminal device A and a terminal device B). The terminal device A and the terminal device B may separately or simultaneously communicate with the network device. It should be noted that a quantity of terminal devices and a quantity of network devices in the communication system shown in FIG. 1 are not limited in embodiments of this application.

The terminal device may also be referred to as a terminal (terminal), user equipment (user equipment, UE), a mobile station (mobile station, MS), a mobile terminal, or the like, and is an apparatus or a device having a wireless communication function. The terminal device may be widely used in various scenarios, for example, machine type communication (machine type communication, MTC), an internet of things (internet of things, IoT), vehicle to everything (vehicle to everything, V2X), virtual reality, augmented reality, industrial control, self-driving, telemedicine, a smart grid, smart furniture, a smart office, a smart wearable, smart transportation, and a smart city. The terminal device may be a subscriber unit (subscriber unit), a cellular phone (cellular phone), a smartphone (smartphone), a wireless data card, a personal digital assistant (personal digital assistant, PDA) computer, a tablet computer, a wireless modem (modem), a handheld device (handset), a laptop computer (laptop computer), customer-premises equipment (customer-premises equipment, CPE), a smart point of sale (point of sale, POS) machine, a wearable device, a vehicle, an uncrewed aerial vehicle, a helicopter, a plane, a ship, a robot, a mechanical arm, a smart home device, an MTC device, a terrestrial station, or the like. A specific technology and a specific device form that are used by the terminal device are not limited in embodiments of this application.

The network device may also be referred to as an access network (access network, AN) device or a radio access network (radio access network, RAN) device, and is an apparatus or a device that may be deployed in a radio access network to provide a wireless communication function for the terminal device. The network device may be a base station used for wireless communication, such as an artificial earth satellite and a high altitude aircraft, for example, a medium earth orbit (medium earth orbit, MEO) satellite or a low earth orbit (low earth orbit, LEO) satellite of a non-geostationary earth orbit (non-geostationary earth orbit, NGEO), a high altitude platform station (high altitude platform station, HAPS), an evolved NodeB (evolved NodeB, eNB), and a 5G base station (gNB). Optionally, the network device in embodiments of this application may include various forms of base stations, for example, a macro base station, a micro base station (also referred to as a small cell), a relay station, an access point, a device that implements a base station function in a communication system evolved after 5G, a transmitting and receiving point (transmitting and receiving point, TRP), a transmitting point (transmitting point, TP), a mobile switching center, and a device that performs a base station function in device-to-device (device-to-device, D2D), vehicle-to-everything (vehicle-to-everything, V2X), and machine-to-machine (machine-to-machine, M2M) communication, and may further include a central unit (central unit, CU) and a distributed unit (distributed unit, DU) in a cloud radio access network (cloud radio access network, C-RAN) system, a CU and a DU in an open radio access network (open RAN, O-RAN, or ORAN), and the like. This is not specifically limited in embodiments of this application.

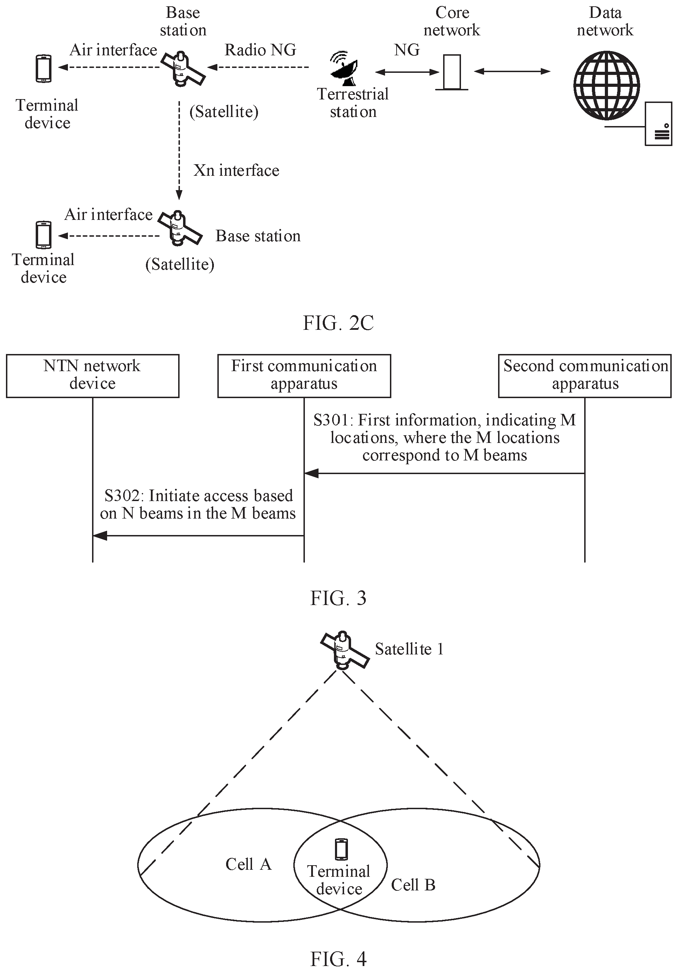

For example, the network device is a satellite. Communication scenarios to which embodiments of this application are specifically applied may be shown in FIG. 2A, FIG. 2B, and FIG. 2C.

In the scenario shown in FIG. 2A, a base station is deployed on the ground, a satellite is connected to a terrestrial station through an air interface, and the terrestrial station may be connected to the base station through a radio or line link. A terminal device on the ground accesses a mobile communication network through an air interface (where there may be various types of air interfaces, for example, a 5G air interface), and the satellite is used as a transmission node to forward information about the terminal device.

In the scenario shown in FIG. 2B, a base station is deployed on a satellite, the satellite is connected to a terrestrial station through an air interface, and the terrestrial station may be connected to a core network through a radio or line link. A terminal device on the ground communicates with the satellite base station through the air interface, to access a mobile communication network. As a base station, the satellite is connected to the terrestrial station through an NG interface of the air interface, and the terrestrial station is connected to the core network through the NG interface. The NG interface may be in a wireless form or a wired form.

Compared with the scenario shown in FIG. 2B, in the scenario shown in FIG. 2C, a communication scenario between satellite base stations is added. Specifically, the satellite base stations may communicate with each other through an Xn interface.

In FIG. 2A to FIG. 2C, the terminal device may include various types of terminal devices that support new radio, for example, the various types of terminals listed above. The terminal device may access a satellite network through the air interface and initiates services such as calls and internet access.

The base station is mainly configured to provide a radio access service, schedule a radio resource to an accessing terminal device, provide a reliable radio transmission protocol and data encryption protocol, and so on.

The core network is mainly configured to provide functions such as user access control, mobility management, session management, user security authentication, and charging. The core network includes a plurality of functional units that may be classified into control-plane functional entities and data-plane functional entities.

The terrestrial station is mainly responsible for forwarding signaling and service data between the satellite and the base station or between the satellite and the core network.

The air interface indicates a radio link between the terminal device and the base station.

The Xn interface indicates an interface between the satellite base stations, and is mainly used for signaling exchange such as handover.

The NG interface indicates an interface between the base station and the core network, an interface between the terrestrial station and the core network, or an interface between the satellite base station and the terrestrial station (in this case, the interface is a radio link), and is mainly used for exchange of non-access stratum (non-access stratum, NAS) signaling or other signaling of the core network and service data of a user.

For ease of understanding by a person skilled in the art, the following explains and describes some terms in embodiments of this application.
(1) For a terrestrial fixed cell and a terrestrial mobile cell, beams of a satellite may be classified into a staring beam and a non-staring beam. The staring beam indicates that the beam of the satellite always serves (or covers) a specific service area in a satellite movement process, and the satellite continuously adjusts a direction of the beam based on a movement requirement, to ensure that the specific area is covered by the beam of the satellite within a period of time when the satellite is visible. The non-staring beam indicates that a beam direction of the beam of the satellite almost does not change in the satellite movement process, and an area served by the beam moves with movement of the satellite. The terrestrial fixed cell may be a cell that provides a service (or coverage) by using the staring beam of the satellite. The terrestrial mobile cell may be a cell that provides a service (or coverage) by using the non-staring beam of the satellite, and a coverage area of the terrestrial mobile cell changes with movement of the satellite.
(2) Ephemeris: The ephemeris may be an accurate location or a trajectory table of a celestial body that changes over time, and is a function of time. For a satellite, a satellite ephemeris may be an expression used for describing a location and a speed (two rows of orbit data) of a space flight object (for example, the satellite). The satellite ephemeris can be used for accurately calculating, predicting, describing, and tracking running statuses such as time, locations, and speeds of the satellite and the flight object; expressing accurate parameters of the flight objects such as a celestial body, a satellite, a spacecraft, a missile, and space garbage; placing the flight objects in three-dimensional space; and describing the past, present, and future of the celestial body in time.
(3) Global navigation satellite system (global navigation satellite system, GNSS) location: A GNSS is a space-based radio navigation and positioning system that can provide users with all-weather 3-dimensional coordinates and speed and time information at any place on the earth's surface or in near-earth space. For example, the GNSS may be a BeiDou navigation satellite system (BeiDou navigation satellite system, BDS), a global positioning system (global positioning system, GPS), a Galileo satellite navigation system (Galileo satellite navigation system, GALILEO), or a global navigation satellite system (global navigation satellite system, GLONASS).
(4) Synchronization signal/physical broadcast channel block (synchronization signal/PBCH block, SSB): The SSB may include a synchronization signal and/or a physical broadcast channel (physical broadcast channel, PBCH). The synchronization signal may include two parts: a primary synchronization signal (primary synchronization signal, PSS) and a secondary synchronization signal (secondary synchronization signal, SSS). In some implementations, the SSB may also be referred to as a synchronization signal block.

Because a non-terrestrial network device such as a satellite usually has a large coverage area and a large quantity of sent beams, when the terminal device needs to search for an NTN cell to access an NTN, the terminal device usually needs to blindly search for a large quantity of beams to select an optimal beam serving the terminal device. Consequently, power consumption overheads are high, and access time is long, affecting user experience.

On this basis, this application provides an access method and an apparatus, to reduce power consumption overheads and improve access efficiency when a terminal device accesses an NTN, so as to improve user experience. The following describes in detail embodiments of this application with reference to accompanying drawings.

In addition, it should be understood that ordinal numbers such as "first" and "second" mentioned in embodiments of this application are used to distinguish between a plurality of objects, and are not intended to limit sizes, content, a sequence, a time sequence, priorities, importance degrees, or the like of the plurality of objects. For example, a first communication apparatus and a second communication apparatus do not mean different priorities, importance degrees, or the like corresponding to the two communication apparatuses.

In embodiments of this application, unless otherwise specified, a quantity of nouns represents "a singular noun or a plural noun", that is, "one or more". "At least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. The character "/" generally indicates an "or" relationship between the associated objects. For example, A/B indicates A or B. "At least one of the following items (pieces)" or a similar expression thereof indicates any combination of these items, including a singular item (piece) or any combination of plural items (pieces). For example, at least one of a, b, or c indicates: a, b, c, a and b, a and c, b and c, or a, b, and c, where a, b, and c may be singular or plural.

The access method provided in embodiments of this application may be performed by a first communication apparatus and a second communication apparatus. The first communication apparatus herein may be a terminal device, or may be a processor, a module, a chip, a chip system, or the like that is in the terminal device and that implements the method. The second communication apparatus may be a network device or a server, or may be a processor, a module, a chip, a chip system, or the like that is in the network device or the server and that implements the method.

FIG. 3 is a diagram of an access method according to an embodiment of this application. The method includes the following steps.

S301: A second communication apparatus sends first information to a first communication apparatus, and correspondingly, the first communication apparatus receives the first information.

The first information indicates M locations, M is an integer greater than or equal to 1, the M locations correspond to M beams, and the M beams are beams in an NTN.

In embodiments of this application, a beam in the NTN may be a beam of a non-terrestrial network device (which may also be referred to as an NTN network device) such as a satellite or a high altitude platform, for example, a beam sent by the non-terrestrial network device in a manner such as beam sweeping; or may be a beam in an NTN cell, for example, a beam sent by the non-terrestrial network device in the NTN cell in a manner such as beam sweeping.

In a communication system, one network device may include one or more cells (cells), or one network device may serve one or more cells. For example, a non-terrestrial network device satellite 1. With reference to a diagram of distribution of the NTN cell shown in FIG. 4, it can be learned that the satellite 1 includes an NTN cell A and an NTN cell B, and may provide a service for a terminal device located in both the NTN cell A and the NTN cell B.

In a possible implementation, the first information may indicate locations corresponding to beams of one or more non-terrestrial network devices (for example, a satellite or a high altitude platform).

In an example, the satellite 1 includes the NTN cell A and the NTN cell B, a satellite 2 includes an NTN cell C, and the first information may indicate a location corresponding to a beam in the NTN cell A included in the satellite 1, a location corresponding to a beam in the NTN cell B included in the satellite 1, and a location corresponding to a beam in the NTN cell C included in the satellite 2.

It may be understood that the one or more non-terrestrial network devices whose locations corresponding to the beams are indicated by the first information may be all or some non-terrestrial network devices that can provide a service for the first communication apparatus (for example, the terminal device), or may be non-terrestrial network devices that satisfy a specific condition with the first communication apparatus. For example, the one or more non-terrestrial network devices whose locations corresponding to the beams are indicated by the first information may be non-terrestrial network devices including NTN cells (for example, a cell edge or a cell reference point) whose distances from the first communication apparatus are less than or equal to a distance threshold (for example, a second distance threshold). A manner of determining the one or more non-terrestrial network devices whose locations corresponding to the beams are indicated by the first information is not limited in this application.

In another possible implementation, the first information may indicate locations corresponding to beams in one or more NTN cells. The one or more NTN cells whose locations corresponding to the beams are indicated by the first information may be neighboring NTN cells of a current cell on which the first communication apparatus camps (that is, a serving cell of the first communication apparatus).

In an example, the serving cell of the first communication apparatus is a terrestrial cell A, a neighboring NTN cell of the terrestrial cell A is the NTN cell B, and the first information may indicate a location corresponding to a beam in the NTN cell B.

It may be understood that there may be one or more neighboring NTN cells of the serving cell. The neighboring NTN cell of the serving cell may be an NTN cell that overlaps a coverage area of the serving cell, an NTN cell whose cell coverage area is neighboring to the coverage area of the serving cell, an NTN cell whose distance between a cell edge (or a cell reference point) and a cell edge (or cell reference point) of the serving cell is less than or equal to a distance threshold (for example, a third distance threshold), or the like. A manner of determining the neighboring NTN cell is not limited in this application.

In some implementations, in addition to indicating the location corresponding to the beam in the NTN cell, the first information may further indicate a cell mode of the NTN cell, so that the first communication apparatus receiving the first information learns of the cell mode of the NTN cell. In an example, in addition to indicating the location corresponding to the beam in the NTN cell B, the first information may further indicate whether the NTN cell B is a terrestrial fixed cell or a terrestrial mobile cell.

The location corresponding to the beam in the NTN cell may be indicated by the first information in a manner such as including a location of the reference point, or information about an angle and a distance of the location relative to the reference point. The following provides descriptions with reference to a specific example.

Example 1: The first information may include a location of a reference point of the NTN cell and corresponding beam pattern (pattern) information. The beam pattern information may include information about an angle and a distance of a location corresponding to each beam in the NTN cell relative to the reference point.

The location corresponding to the beam may be a location of any point in a beam coverage area, for example, a location corresponding to an edge point in the beam coverage area (which may also be referred to as a location corresponding to a beam edge point), or a location corresponding to a center point in the beam coverage area (which may also be referred to as a location corresponding to a beam center point). The location of the reference point of the NTN cell may be a location corresponding to any point in a coverage area of the NTN cell, for example, a location corresponding to an edge point in the coverage area of the NTN cell or a location corresponding to a center point in the coverage area of the NTN cell. For ease of understanding, in the following descriptions of this application, an example in which the location of the reference point of the NTN cell is the location corresponding to the center point in the coverage area of the NTN cell, and the location corresponding to the beam is the location corresponding to the center point of the beam coverage area is used for description.

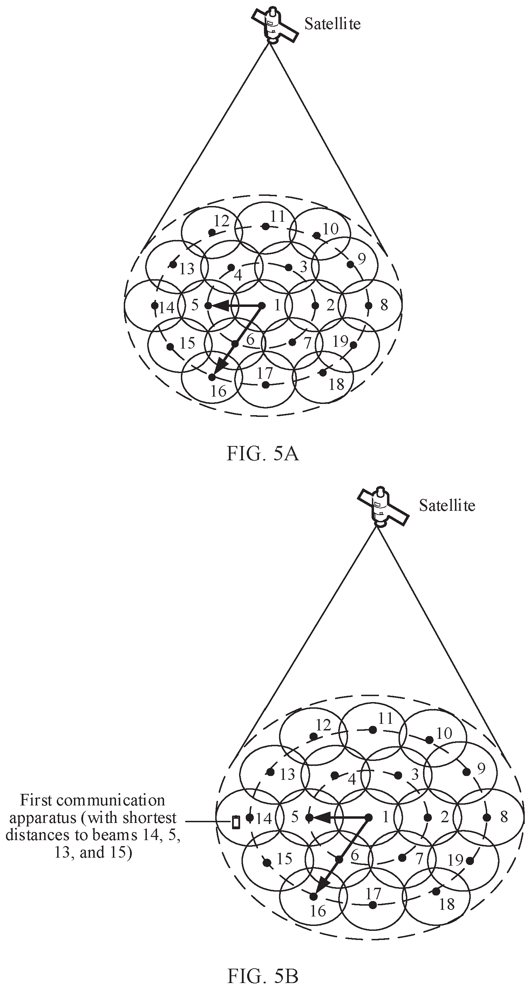

With reference to a diagram of locations corresponding to beams shown in FIG. 5A, in FIG. 5A, each non-dashed-line circle represents a coverage area of one beam, a point in the non-dashed-line circle represents a location corresponding to the beam, a number in the non-dashed-line circle represents a number of the beam, and an example in which a reference point is a location corresponding to a beam 1 is used. The NTN cell includes the beam 1, a beam 2, ..., and a beam 19, and there are 19 beams in total. The first information may include the location of the reference point, information about an angle and a distance of a location corresponding to the beam 1 relative to the reference point, information about an angle and a distance of a location corresponding to the beam 2 relative to the reference point, ..., and information about an angle and a distance of a location corresponding to the beam 19 relative to the reference point. The location corresponding to each beam in the NTN cell may be indicated (or determined) by using the location of the reference point and the information about the angle and the distance of the location corresponding to each beam in the NTN cell relative to the reference point.

In some implementations, the location of the reference point may indicate coordinates of the reference point in a coordinate system such as a terrestrial coordinate system or an earth-centered, earth-fixed (earth-centered, earth-fixed, ECEF) coordinate system, or may indicate a longitude and a latitude of the reference point. In a plane rectangular coordinate system in which the reference point is used as an origin and the ground is an XoY plane, the angle of the location corresponding to the beam relative to the reference point may be an included angle between a line connecting the location corresponding to the beam and the origin and a positive direction of a horizontal (X) axis of the plane rectangular coordinate system, an included angle between a line connecting the location corresponding to the beam and the origin and a positive direction of a vertical (Y) axis of the plane rectangular coordinate system, or the like.

In some implementations, locations corresponding to beams may be further classified based on distances relative to the reference point. An angle of the location corresponding to the beam relative to the reference point is indicated for each type of distance, to reduce signaling overheads and calculation overheads.

Still using FIG. 5A as an example, the distance between the location corresponding to the beam 1 and the reference point is a distance 0, the distances between the locations corresponding to the beam 2 to the beam 7 and the reference point are a distance 1, and the distances between the locations corresponding to the beam 8 to the beam 19 and the reference point are a distance 2. The first information may include three (or three types of) distances and 19 angles. For example, the first information includes the distance 0 and the angle of the location corresponding to the beam 1 associated with the distance 0 relative to the reference point, the distance 1 and the angles of the locations corresponding to the beam 2 to the beam 7 associated with the distance 1 relative to the reference point, and the distance 2 and the angles of the locations corresponding to the beam 8 to the beam 19 associated with the distance 2 relative to the reference point. Any angle and a distance associated with the angle is an angle and a distance of a location relative to the reference point.

Example 2: For an NTN cell whose cell mode is a terrestrial fixed cell, because a beam coverage area of the NTN cell is relatively fixed, and does not change with movement of a non-terrestrial network device such as a satellite in service time of the NTN cell, the first information may include information about a location corresponding to each beam in the NTN cell.

The location information corresponding to the beam may be coordinates of a location corresponding to the beam in coordinate systems such as a terrestrial coordinate system or an ECEF coordinate system, or may be a longitude and a latitude of the location corresponding to the beam, or the like.

Example 3: For an NTN cell whose cell mode is a terrestrial mobile cell, because a beam coverage area of the NTN cell changes with movement of a non-terrestrial network device such as a satellite, the first information may include information about a pitch value (Pitch Value) and a horizontal value (Horizontal Value) that correspond to each beam in the NTN cell.

The first communication apparatus receiving the first information may determine, based on an ephemeris of the non-terrestrial network device (for example, the satellite) corresponding to the NTN cell, a current location of the non-terrestrial network device and a vertical height from the ground, and determine, with reference to the pitch value (Pitch Value) and the horizontal value (Horizontal Value) that correspond to each beam, a location corresponding to each beam.

The ephemeris of the non-terrestrial network device corresponding to the NTN cell may be indicated or configured by using the first information. For example, the first information may carry information indicating the ephemeris of the NTN cell corresponding to the location of the beam. The ephemeris of the non-terrestrial network device corresponding to the NTN cell may alternatively be obtained by the first communication in another manner. For example, the first communication apparatus prestores an ephemeris of each non-terrestrial network device, or the first communication may obtain the ephemeris by receiving the ephemeris broadcast by the non-terrestrial network device. This is not limited in this application.

It may be understood that the foregoing Example 1 to Example 3 are merely examples in which the first information indicates the location corresponding to the beam in the NTN cell, and the first information may alternatively indicate the location corresponding to the beam in the NTN cell in another manner. For example, an NTN cell includes M beams, and the first information may alternatively indicate, in a manner different from that in Example 1 to Example 3, M locations corresponding to the M beams. A specific manner of indicating the location by the first information is not limited in this application.

In some implementations, the first information may further include an identifier of the beam corresponding to each indicated location. For example, the first information indicates M locations corresponding to M beams in the NTN cell B, and the first information may further include identifiers (such as beam numbers (beam IDs)) of the M beams that are in one-to-one correspondence with the M locations, so that the first communication apparatus receiving the first information learns of the beam corresponding to each location.

For example, the second communication apparatus may send the first information in a broadcast or multicast manner or another manner, for example, may send, in the broadcast or multicast manner or the another manner, the first information to the first communication apparatus located in one or more TN cells.

S302: The first communication apparatus initiates access based on N beams in the M beams.

Locations corresponding to the N beams and a location of the first communication apparatus satisfy a specific location relationship, the N beams belong to the M beams, N is an integer greater than or equal to 1, and N is less than or equal to M.

For example, when the first communication apparatus needs to search for an NTN cell for initial access, for example, when the first communication apparatus is located in or enters a geographical area without cellular network coverage, and needs to search for an NTN cell for initial access, if an NTN cell satisfies an access (or camping) requirement, the first communication apparatus may obtain, based on the first information, locations corresponding to beams in the NTN cell (for example, M locations corresponding to M beams in the NTN cell); select (or determine) N beams based on the locations corresponding to the M beams in the NTN cell; and initiate access based on some or all of the N selected beams.

In a possible implementation, the location relationship may be that a distance between the location corresponding to the beam and the location of the first communication apparatus is less than or equal to a first distance threshold; or distances between the locations corresponding to the N beams and the location of the first communication apparatus are N shortest distances in distances between locations corresponding to the M beams and the location of the first communication apparatus.

For example, M is 19, and N is 4. For example, the locations corresponding to the first communication apparatus and the M beams in the NTN are shown in FIG. 5B. The first communication apparatus may select, based on the location of the first communication apparatus, four beams (for example, a beam 14, a beam 5, a beam 13, and a beam 15), where distances between locations corresponding to the beams and the location of the first communication apparatus are less than or equal to a distance threshold, or the first communication apparatus may select four beams (for example, a beam 14, a beam 5, a beam 13, and a beam 15), where distances between locations corresponding to the beams and the location of the first communication apparatus are the shortest.

The quantity N of selected beams may be preconfigured in the first communication apparatus, or may be indicated by another apparatus (for example, the second communication apparatus) to the first communication apparatus, or may be determined by the first communication apparatus in another manner. This is not limited in this application.

In some implementations, the first information may further indicate an update interval (or an update periodicity, or an update time frequency) of the first information. The non-terrestrial network device such as the satellite usually moves based on a specific trajectory. A larger update interval may indicate a larger distance between locations that correspond to beams in the NTN cell and that are indicated by first information sent twice consecutively. Therefore, in this embodiment of this application, the quantity N of selected beams may alternatively be determined based on the update interval.

For example, the first communication apparatus may perform determining based on the update interval of the first information and a mapping relationship between the update interval and a quantity of beams. The mapping relationship may be represented by using a formula, or may be represented by using a table. The mapping relationship may be preconfigured in the first communication apparatus, or may be indicated to the first communication apparatus by another apparatus (for example, the second communication apparatus).

Optionally, the update interval is positively correlated with a value of N, or in other words, N is inversely proportional to an update time frequency of the first information, to ensure that a range of distances between the N selected beams and the first communication apparatus is within a beam distance accuracy error range.

An LEO satellite with an orbital height of 600 km, the LEO satellite with a radius of 50 km, and a beam distance error of 2.857s/h*xh*7.5 km/s are used as an example. 2.857s/h represents an ephemeris error of a satellite per hour, and 7.5 km/s represents a satellite speed. The second communication apparatus sends the first information every x hours (h), and N corresponding to different update intervals may be shown as follows.

If the second communication apparatus sends (or updates) the first information every 2 h, N is 1.

If the second communication apparatus sends (or updates) the first information every 4 h, N is 4.

If the second communication apparatus sends (or updates) the first information every 8 h, N is 8.

After selecting the N beams from the M beams, the first communication apparatus may detect one or more of the N beams, determine a target beam, and initiate access based on the target beam.

For example, N is 4, the locations corresponding to the first communication apparatus and the M beams in the NTN are shown in FIG. 5B, and the N selected beams are the beam 5, the beam 14, the beam 13, and the beam 15. The first communication apparatus may separately detect SSBs carried on the beam 5, the beam 14, the beam 13, and the beam 15, to obtain signal strength or signal quality of the detected SSB on each beam; select a beam corresponding to an SSB with high signal strength or signal quality as a target beam for initiating access; and initiate access.

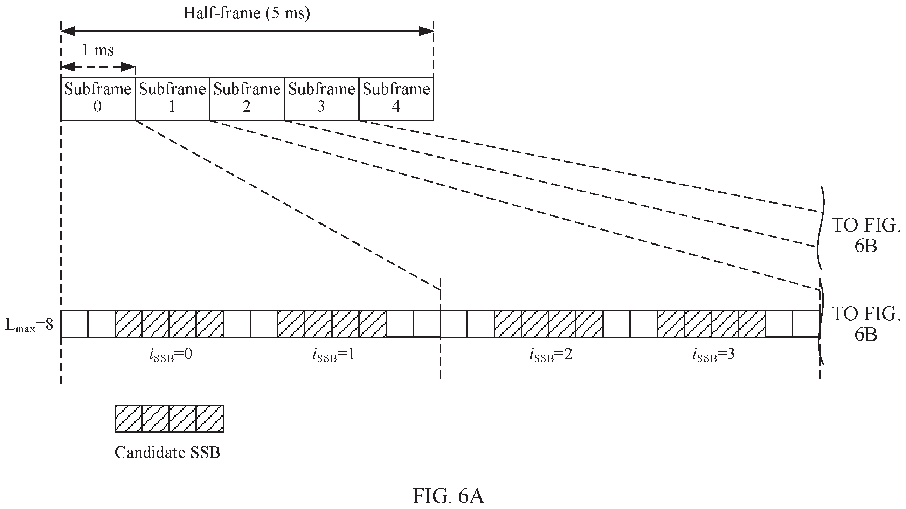

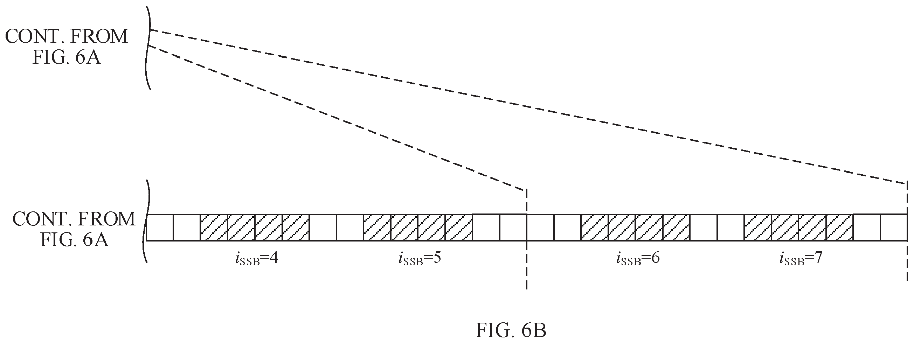

For example, a beam frequency is below 3 gigahertz (GHz) (in sub-3GHz), a subcarrier spacing (subcarrier spacing, SCS) is 15 kHz (the SCS=15 kHz), and an SSB carried on a beam uses a case (case) A transmission mode. With reference to a diagram of distribution of SSBs in a half-frame shown in FIG. 6A and FIG. 6B, an index of a 1^{st} symbol of eight candidate SSBs in a half-frame in which the SSBs are located may be {2, 8}+14×n, where n=0, 1, 2, or 3.

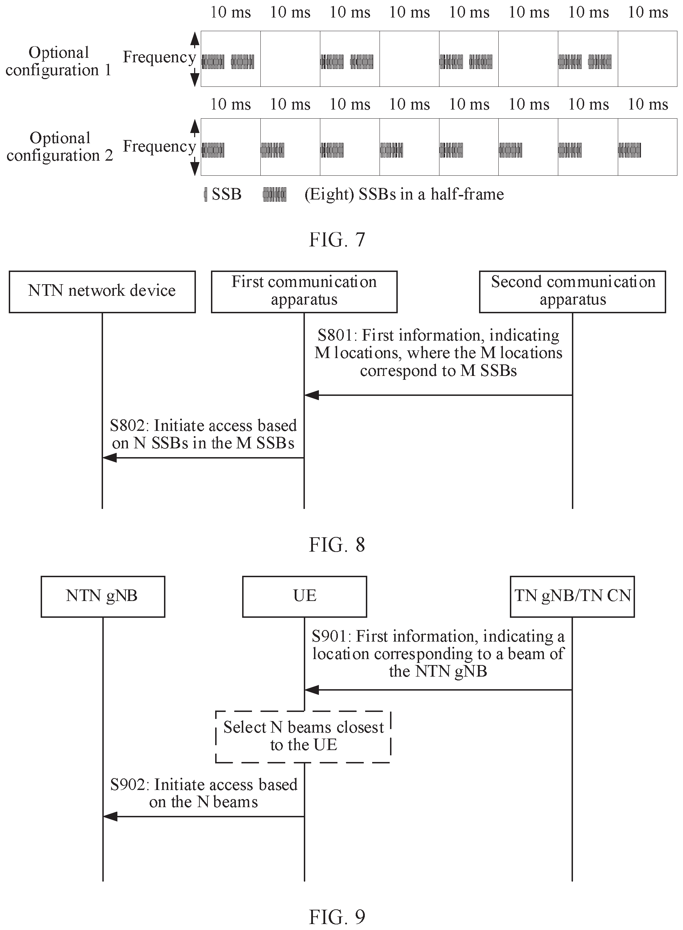

For example, a beam sending periodicity is 20 ms, and 16 SSBs carried on beams need to be broadcast within 20 ms. With reference to an SSB pattern (pattern) in the case A transmission mode shown in FIG. 6A and FIG. 6B, a pattern (pattern) of broadcasting 16 SSBs within 20 ms may be shown in FIG. 7. For an optional configuration 1, the sending periodicity of 20 ms corresponds to two subframes (10 ms), 16 SSBs may be distributed in one subframe, and each half-frame in the subframe includes eight SSBs.

For an optional configuration 2, the sending periodicity of 20 ms corresponds to two subframes, 16 SSBs may be distributed in two subframes, and one half-frame in each subframe includes eight SSBs.

In some implementations, the first information may further indicate detection time of the M beams (or the SSBs carried on the beams) in the NTN cell, to avoid blind detection on the beams (or the SSBs carried on the beams) by the first communication apparatus. For example, the first information may include a beam sending periodicity of a satellite, and system startup time (for example, an offset relative to periodicity start time or an index of a starting symbol in a periodicity) of each beam (or the SSB carried on the beam). After selecting the N beams, the first communication apparatus may determine, based on the detection time of the N beams, a time domain position of the SSB carried on each beam; detect one or more of the N beams; and determine the target beam, to avoid blind detection on the beams, so as to reduce power consumption, time, and other overheads.

Because the non-terrestrial network device such as the satellite is far from the ground and a link budget is limited, the first communication apparatus (for example, the terminal device) may further adjust a radiation direction of an antenna of the first communication apparatus based on the ephemeris of the non-terrestrial network device, and/or send first prompt information based on the ephemeris. The first prompt information is used for prompting a user to adjust a posture of the first communication apparatus, so that the antenna of the first communication apparatus is aligned with the non-terrestrial network device as much as possible, to improve an antenna gain of the first communication apparatus.

For example, the first communication apparatus may determine a current location (for example, a GNSS location) of the non-terrestrial network device based on the ephemeris, may determine an orientation (for example, the horizontal value and the pitch value) of the non-terrestrial network device relative to the first communication apparatus with reference to the location (for example, the GNSS location) of the first communication apparatus, and may adjust the radiation direction of the antenna based on the orientation of the non-terrestrial network device relative to the first communication apparatus, or send prompt information such as an image-text or a voice to prompt the user to adjust the posture of the first communication apparatus, so that the antenna of the first communication apparatus is aligned with the non-terrestrial network device as much as possible, to improve the antenna gain of the first communication apparatus.

In a possible implementation, when initiating access to the target beam, the first communication apparatus may initiate random access on a target RO corresponding to the target beam, for example, send a random access preamble (preamble) to a non-terrestrial network device that sends the target beam, attempt to establish a connection to the non-terrestrial network device, and so on.

Optionally, the first information may further indicate a mapping relationship between an SSB and a random access channel occasion RO. The first communication apparatus may further determine, based on the mapping relationship between the SSB and the RO, a target RO that has a mapping relationship with an SSB carried on the target beam.

For example, a network may divide preambles available for random access into several groups, define one RO for each group, and map the RO to an SSB beam. A quantity of SSBs to which each RO is mapped and a quantity of cell-broadcast (cell-broadcast, CB) preambles (ssb-perRACH-OccasionAndCB-preamblesPerSSB) to which each SSB is mapped can be defined. For example, a value of the quantity of SSBs to which each RO is mapped may be 1/8, 1/4, 1/2, 1, 2, 4, 8, or 16.

For example, the mapping relationship between the SSB and the RO may include: (1) CB preambles in each PRACH occasion progressively increase based on a preamble index (index) order. (2) When RACH frequency-division multiplexing (frequency-division multiplexing, FDM) (msg1-FDM, where there are a plurality of ROs in frequency domain) is configured, increase based on frequency domain indexes. (3) When a plurality of ROs are configured in a PRACH slot, increase based on indexes in the PRACH slot. (4) When a plurality of PRACH slots are configured, increase based on PRACH slot indexes.

It may be understood that the mapping relationship between the SSB and the RO is merely an example, and the mapping relationship between the SSB and the RO indicated by the first information is not limited in this application. In addition, it may be understood that the mapping relationship between the SSB and the RO may be further preconfigured in the first communication apparatus, or may be configured (or indicated) for the first communication apparatus by using another message sent by another apparatus.

The foregoing descriptions are provided by using an example in which the first information may indicate the M locations corresponding to the M beams, and may further indicate the detection time of the M beams, the ephemeris of the NTN network device corresponding to the M beams, the update interval of the first information, the mapping relationship between the SSB and the RO, the cell mode of the NTN cell corresponding to the M beams, and the like. It may be understood that the first information may be sent by using one or more pieces of signaling (or messages). For example, fields or indication fields that indicate different content in the first information may be located in the one or more pieces of signaling (or messages).

In some implementations, the second communication apparatus may be a TN network device, a terrestrial station, a TN server, a network element in a TN CN, or the like. When the first communication apparatus camps on a TN cell, the second communication apparatus may send the first information to the second communication apparatus, so that the first communication apparatus searches for an NTN cell when the first communication apparatus is located in or enters a geographical area without cellular network coverage, and quickly performs access.

In addition, it should be understood that, that the second communication apparatus sends the first information to the first communication apparatus is merely an example. For example, the first information may alternatively be sent to the first communication apparatus by a satellite. The first information may indicate a location corresponding to a beam in a neighboring NTN cell of an NTN cell on which the first communication apparatus camps, so that the first communication apparatus quickly accesses the NTN cell when moving to the neighboring NTN cell, and so on.

Each beam in the cell carries one SSB, or each SSB in the cell may represent a beam in one direction. Therefore, in this application, the beam in the foregoing method embodiments may also be replaced with the SSB. For example, FIG. 8 is a diagram of another access method according to an embodiment of this application. The method includes the following steps.

S801: A second communication apparatus sends first information to a first communication apparatus, and correspondingly, the first communication apparatus receives the first information.

The first information indicates M locations, M is an integer greater than or equal to 1, the M locations correspond to M SSBs, and the M SSBs are SSBs in an NTN.

S802: The first communication apparatus initiates access based on N SSBs in the M SSBs.

Locations corresponding to the N beams and a location of the first communication apparatus satisfy a specific location relationship, the N beams belong to the M beams, N is an integer greater than or equal to 1, and N is less than or equal to M.

Different from the access method shown in FIG. 3 in which the first information indicates information such as the location related to the beam, and the first communication apparatus may initiate access based on the N beams in the M beams, in the access method shown in FIG. 8, the first information indicates information such as the location related to the SSB, and the first communication apparatus may initiate access based on the N SSBs in the M SSBs. For a specific implementation of the access method in FIG. 8, refer to the implementation of the access method shown in FIG. 3. Details are not described again.

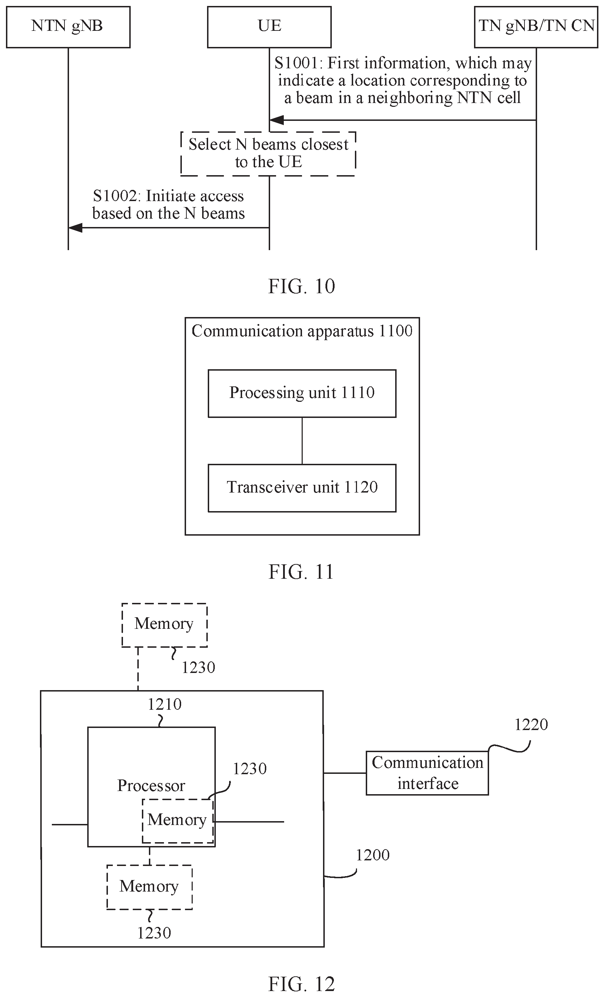

The following describes in detail the positioning method shown in FIG. 3 with reference to specific examples shown in FIG. 9 and FIG. 10. In the following example, an example in which the first communication apparatus is UE, the second communication apparatus is a TN base station (for example, a TN gNB) or a network element in a TN CN (TN CN), and the non-terrestrial network device is an NTN base station (for example, an NTN gNB) is used for description.

FIG. 9 shows an example of an access procedure. As shown in FIG. 9, the procedure includes the following steps.

S901: The TN gNB/TN CN may send first information to the UE based on a specified update interval, and correspondingly, the UE receives the first information. The first information may indicate a location corresponding to a beam of the NTN gNB.

For example, the NTN gNB includes an NTN cell A and an NTN cell B. The first information may include beam pattern information corresponding to the NTN cell A and beam pattern information corresponding to the NTN cell B. The beam pattern information corresponding to each NTN cell may indicate a location of each beam corresponding to the NTN cell. For example, the beam pattern information corresponding to each NTN cell may include a reference point of the NTN cell and information about an angle and a distance of a location corresponding to each beam in the NTN cell relative to the reference point, and indicate a location of each beam in the NTN cell.

In addition, the beam pattern information corresponding to each NTN cell may further indicate detection time of each beam corresponding to the NTN cell. For example, the beam pattern information may further include system startup time and periodicity information that correspond to each beam in the NTN cell, and indicate the detection time of each beam in the NTN cell.

In some implementations, the first information may further indicate one or more of a cell mode of each NTN cell of the NTN gNB, an ephemeris of the NTN gNB, an update interval of the first information, a mapping relationship between an SSB and an RO, or the like.

S902: The UE initiates access based on N beams.

For example, the UE may select, based on GNSS location information of the UE and the first information, N beams from M beams in an NTN cell that satisfies an access (or camping) requirement, for example, select N beams closest to the UE. After selecting the N beams closest to the UE, the UE may further determine, based on an ephemeris of an NTN gNB corresponding to the NTN cell that satisfies the access (or camping) requirement, an orientation of the NTN gNB relative to the UE; adjust a radiation direction of an antenna of the UE; and/or send first prompt information to adjust a posture of the UE, so that the antenna of the UE is aligned with the NTN gNB. After the antenna of the UE is aligned with the NTN gNB, the UE can detect one or more of the N beams, determine a target beam, and initiate access.

FIG. 10 shows an example of an access procedure. As shown in FIG. 10, the procedure includes the following steps.

S1001: The TN gNB/TN CN may send first information to the UE based on a specified update interval, and correspondingly, the UE receives the first information. The first information may indicate a location corresponding to a beam in a neighboring NTN cell.

For example, for a neighboring NTN cell in a terrestrial mobile cell mode, the first information may include a reference location (referenceLocation-r17) of a center point in the NTN cell, a beam number (beam ID) of each beam, and a pitch value (Pitch Value) and a horizontal value (Horizontal Value) of a beam that indicate (or are used for determining) a location of each beam in the NTN cell. The first information may further include one or more of the following information such as a mapping (or association) relationship between an SSB number (SSB ID) and an RO, a cell radius (distanceThresh-r17) of the NTN cell, and a beam radius (BeamThresh). r17 represents standard content of 3GPP Release 17 (Releases 17, R17).

For a neighboring NTN cell in a terrestrial fixed cell mode, the first information may include a reference location (referenceLocation-r17) of a center point in the NTN cell, a beam number (beam ID) of each beam, and a terrestrial beam point reference location (Beamreferencelocation) that indicate (or are used for determining) a location of each beam in the NTN cell. The first information may further include one or more of the following information such as a mapping (or association) relationship between an SSB number (SSB ID) and an RO, a cell radius (distanceThresh-r17) of the NTN cell, and a beam radius (BeamThresh).

S1002: The UE initiates access based on N beams.

For example, when the UE is located in or enters a geographical area without cellular network coverage, and the neighboring NTN cell satisfies an access (or camping) requirement, the UE may select N beams from M beams in the NTN cell based on GNSS location information of the UE and the first information, for example, select N beams closest to the UE. After selecting the N beams closest to the UE, the UE may further determine, based on an ephemeris of the NTN gNB corresponding to the NTN cell, an orientation of the NTN gNB relative to the UE; adjust a radiation direction of an antenna of the UE; and/or send first prompt information to adjust a posture of the UE, so that the antenna of the UE is aligned with the NTN gNB. After the antenna of the UE is aligned with the NTN gNB, the UE can detect one or more of the N beams, determine a target beam, and initiate access.

The following describes a communication apparatus provided in embodiments of this application. FIG. 11 is a diagram of a structure of a communication apparatus according to an embodiment of this application. The communication apparatus may include units or modules corresponding to all or some of the steps in the foregoing method embodiments, and may be configured to perform the steps performed by the first communication apparatus or the second communication apparatus in the foregoing embodiments. For details, refer to related descriptions in the foregoing method embodiments.

As shown in FIG. 11, the communication apparatus 1100 includes a processing unit 1110 and a transceiver unit 1120. The processing unit 1110 may be a processor or a processing circuit, and the transceiver unit 1120 may further be an interface unit or an input/output interface. The communication apparatus 1100 may be configured to implement the steps performed by the first communication apparatus or the second communication apparatus in the foregoing embodiments. The transceiver unit 1120 may be configured to implement a sending-related operation and/or a receiving-related operation on a side of the first communication apparatus or the second communication apparatus in the foregoing method embodiments.

Optionally, the transceiver unit 1120 may include a sending unit and/or a receiving unit. The sending unit is configured to perform a sending-related operation on a side of the first communication apparatus or the second communication apparatus in the foregoing method embodiments. The receiving unit is configured to perform a receiving-related operation on a side of the first communication apparatus or the second communication apparatus in the foregoing method embodiments.

It should be noted that the communication apparatus 1100 may include the sending unit, but does not include the receiving unit. Alternatively, the communication apparatus 1100 may include the receiving unit, but does not include the sending unit. This may be specifically determined depending on whether the foregoing solution performed by the communication apparatus 1100 includes a sending action and a receiving action.

When the communication apparatus 1100 is a chip, the chip includes a transceiver unit and a processing unit. The transceiver unit may be an input/output circuit, a communication interface, or an interface unit. The processing unit may be a processor, a microprocessor, an integrated circuit, or a logic circuit integrated on the chip.

When the communication apparatus 1100 is configured to implement the steps performed by the first communication apparatus (such as the UE) in the foregoing embodiments, the transceiver unit 1120 may be configured to implement a sending-related operation and/or a receiving-related operation on a side of the first communication apparatus, for example, configured to implement the sending-related operation and/or the receiving-related operation on the side of the first communication apparatus in FIG. 3, FIG. 8, FIG. 9, or FIG. 10; and the processing unit 1110 may be configured to implement a processing-related operation on a side of the first communication apparatus, for example, configured to implement the processing-related operation on the side of the first communication apparatus in FIG. 3, FIG. 8, FIG. 9, or FIG. 10.

For example, the communication apparatus 1100 is configured to implement the steps performed by the first communication apparatus in FIG. 3. The transceiver unit 1120 may be configured to receive first information, where the first information indicates M locations, the M locations correspond to M beams, the M beams are beams in an NTN, and M is an integer greater than or equal to 1; and the processing unit 1110 may be configured to initiate access based on N beams in the M beams, where locations corresponding to the N beams and the location of the first communication apparatus satisfy a specific location relationship, the N beams belong to the M beams, N is an integer greater than or equal to 1, and N is less than or equal to M.

When the communication apparatus 1100 is configured to implement the steps performed by the second communication apparatus (such as the TN gNB) in the foregoing embodiments, the transceiver unit 1120 may be configured to implement a sending-related operation and/or a receiving-related operation on a side of the second communication apparatus (such as the TN gNB), for example, configured to implement the sending-related operation and/or the receiving-related operation on the side of the second communication apparatus in FIG. 3, FIG. 8, FIG. 9, or FIG. 10; and the processing unit 1110 may be configured to implement a processing-related operation on a side of the second communication apparatus, for example, configured to implement the processing-related operation on the side of the second communication apparatus in FIG. 3, FIG. 8, FIG. 9, or FIG. 10.

For example, the communication apparatus 1100 is configured to implement the steps performed by the second communication apparatus in FIG. 3. The processing unit 1110 may be configured to determine the first information, where the first information indicates M locations, the M locations correspond to M beams, the M beams are beams in an NTN, and M is an integer greater than or equal to 1; and the transceiver unit 1120 may be configured to send the first information to the first communication apparatus.

For another step that can be implemented by the communication apparatus 1100, refer to related descriptions of the first communication apparatus or the second communication apparatus in the foregoing embodiment. Details are not described herein again.

As shown in FIG. 12, this application further provides a communication apparatus 1200. The communication apparatus includes a processor 1210, and may further include a communication interface 1220. The processor 1210 and the communication interface 1220 are coupled to each other. The communication interface 1220 may be a transceiver, an input/output interface, an input/output circuit, or the like. When the communication apparatus 1200 is configured to implement the steps performed by the first communication apparatus or the second communication apparatus in the foregoing embodiments, the processor 1210 may be configured to implement the functions of the processing unit 1110, and the communication interface 1220 may be configured to implement the functions of the transceiver unit 1120.

It may be understood that, similar to the transceiver unit 1120, the communication interface 1220 may include an input interface (or an input circuit) and/or an output interface (or an output circuit). The input interface may implement the receiving-related operation in the foregoing method embodiment, and the output interface may implement the sending-related operation in the foregoing method embodiment. In addition, the communication apparatus 1200 may include an output interface, but does not include an input interface. Alternatively, the communication apparatus 1200 may include an input interface but does not include an output interface. This may be specifically determined depending on whether the foregoing solution performed by the communication apparatus 1200 includes a sending action and a receiving action.

In addition, it should be noted that when the communication apparatus 1200 is a device, the communication interface 1220 may be a transceiver.

It may be understood that, when the communication interface 1220 is a transceiver, the transceiver may include a transmitter and/or a receiver. The transmitter may be configured to implement the sending-related operation in the foregoing method embodiments, and the receiver may be configured to perform the receiving-related operation in the foregoing method embodiments. The processor 1210 may be configured to implement another operation in the foregoing method embodiments. In addition, the communication apparatus 1200 may include a transmitter but does not include a receiver. Alternatively, the communication apparatus 1200 may include a receiver but does not include a transmitter. This may be specifically determined depending on whether the foregoing solution performed by the communication apparatus 1200 includes a sending action and a receiving action.

Optionally, the communication apparatus 1200 may further include a memory 1230, configured to store instructions executed by the processor 1210, input data needed by the processor 1210 to run instructions, or data generated after the processor 1210 runs instructions. The memory 1230 may be a physically independent unit, or may be coupled to the processor 1210, or the processor 1210 includes the memory 1230.

When the communication apparatus 1200 is a chip, the chip includes a processor and a communication interface, and may further include a memory. Alternatively, the communication interface may be an input/output circuit. The processor may be a processing module, a microprocessor, or an integrated circuit integrated on the chip. A sending operation of the first communication apparatus or the second communication apparatus in the foregoing method embodiments may be understood as an output of the chip, and a receiving operation of the first communication apparatus or the second communication apparatus in the foregoing method embodiments may be understood as an input of the chip.

It may be understood that the structure shown in FIG. 12 does not constitute a specific limitation on the communication apparatus 1200. For example, in some other embodiments of this application, the communication apparatus 1200 may include more or fewer components than those shown in the figure, or some components are combined, or some components are split, or different component arrangements may be used. The components shown in the figure may be implemented by hardware, software, or a combination of software and hardware.

An embodiment of this application further provides a computer-readable medium. The computer-readable medium stores a computer program or instructions, and when the computer program or the instructions are executed by a processor, the access method in any one of the foregoing method embodiments is implemented.

An embodiment of this application further provides a computer program product, including a computer program or instructions, and when the computer program or the instructions are executed by a processor, the access method in any one of the foregoing method embodiments is implemented.

An embodiment of this application further provides a chip system, including a processor. The processor may be configured to execute a computer program or instructions, to implement the access method in any one of the foregoing method embodiments.

It should be noted that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a logical circuit, a field programmable gate array (field programmable gate array, FPGA), or another programmable logic device, a transistor logic device, a hardware component, or any combination thereof. The general-purpose processor may be a microprocessor or any regular processor or the like.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk drive, a removable hard disk, a compact disc read-only memory (compact disc read-only memory, CD-ROM), or any other form of storage medium well-known in the art. For example, a storage medium is coupled to a processor, so that the processor can read information from the storage medium and write information into the storage medium. Certainly, the storage medium may alternatively be a component of the processor. The processor and the storage medium may be disposed in an ASIC. In addition, the ASIC may be located in a network device or a terminal device. Certainly, the processor and the storage medium may exist in the network device or the terminal device as discrete components.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer programs or instructions. When the computer programs or instructions are loaded and executed on a computer, all or some of procedures or functions in embodiments of this application are executed. The computer may be a general-purpose computer, a special-purpose computer, a computer network, a network device, a user equipment, or another programmable apparatus. The computer program or instructions may be stored in a computer-readable storage medium, or transmitted from one computer-readable storage medium to another computer-readable storage medium. For example, the computer program or instructions may be transmitted from one network device, terminal, computer, server, or data center to another network device, terminal, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk drive, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In addition, it should be understood that the term "for example" in embodiments of this application is used to represent giving an example, an illustration, or a description. Any embodiment or design scheme described as an "example" in this application should not be explained as being more preferred or having more advantages than another embodiment or design scheme. Exactly, the term "example" is for presenting a concept in a specific manner.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. An access method, applied to a first communication apparatus, and comprising:
receiving first information, wherein the first information indicates M locations, the M locations correspond to M beams or synchronization signal/physical broadcast channel blocks SSBs, the M beams or SSBs are beams or SSBs in a non-terrestrial network NTN, and M is an integer greater than or equal to 1; and
initiating access based on N beams or SSBs in the M beams or SSBs, wherein locations corresponding to the N beams or SSBs and a location of the first communication apparatus satisfy a specific location relationship, the N beams or SSBs belong to the M beams or SSBs, N is an integer greater than or equal to 1, and N is less than or equal to M.

2. The method according to claim 1, wherein the location relationship is that a distance between a location corresponding to a beam or an SSB and the location of the first communication apparatus is less than or equal to a first distance threshold; or
distances between the locations corresponding to the N beams or SSBs and the location of the first communication apparatus are N shortest distances in distances between locations corresponding to the M beams or SSBs and the location of the first communication apparatus.

3. The method according to claim 1 or 2, wherein the first information comprises information about the M locations; or
the first information comprises information about a location of a reference point, and angles and distances of the M locations relative to the reference point; or
the first information comprises information about pitch values and horizontal values that correspond to the M locations; or
the first information comprises a location of a reference point, P distances, and M angles, any one of the P distances is associated with at least one of the M angles, an angle in the M angles and a distance associated with the angle are an angle and a distance of one of the M locations relative to the reference point, P is an integer greater than or equal to 1, and P is less than or equal to M.

4. The method according to any one of claims 1 to 3, wherein the initiating access based on the N beams or SSBs in the M beams or SSBs comprises:
detecting one or more of the N beams or SSBs to determine a target beam or SSB; and
initiating access based on the target beam or SSB.

5. The method according to claim 4, wherein the first information further indicates detection time of the M beams or SSBs, and the detecting one or more of the N beams or SSBs to determine the target beam or SSB comprises:
detecting one or more of the N beams or SSBs based on detection time of the N beams or SSBs to determine the target beam or SSB.

6. The method according to any one of claims 1 to 5, wherein the first information further indicates an ephemeris of an NTN network device corresponding to the M beams or SSBs, and the method further comprises:
adjusting a radiation direction of an antenna of the first communication apparatus based on the ephemeris; and/or
sending first prompt information based on the ephemeris, wherein the first prompt information is used for prompting adjustment of a posture of the first communication apparatus.

7. The method according to any one of claims 4 to 6, wherein the first information further indicates a mapping relationship between an SSB and a random access channel occasion RO, and the initiating access based on the target beam comprises:
determining, based on the mapping relationship between the SSB and the RO, a target RO that has a mapping relationship with an SSB carried on the target beam; and
initiating access to the target beam based on the target RO; and
the initiating access based on the target SSB comprises:
determining, based on the mapping relationship between the SSB and the RO, a target RO that has a mapping relationship with the target SSB; and
initiating access to the target SSB based on the target RO.

8. The method according to any one of claims 1 to 7, wherein the first information further indicates an update interval of the first information, and N is determined based on the update interval of the first information.

9. The method according to claim 8, wherein the update interval is positively correlated with a value of N.

10. The method according to any one of claims 1 to 9, wherein the first information further indicates a cell mode of an NTN cell corresponding to the M beams or SSBs.

11. An access method, applied to a second communication apparatus, and comprising:
sending first information to a first communication apparatus, wherein the first information indicates M locations, the M locations correspond to M beams or synchronization signal/physical broadcast channel blocks SSBs, the M beams or SSBs are beams or SSBs in a non-terrestrial network NTN, and M is an integer greater than or equal to 1.

12. The method according to claim 11, wherein the first information comprises information about the M locations; or
the first information comprises information about a location of a reference point, and angles and distances of the M locations relative to the reference point; or
the first information comprises information about pitch values and horizontal values that correspond to the M locations; or
the first information comprises a location of a reference point, P distances, and M angles, any one of the P distances is associated with at least one of the M angles, an angle in the M angles and a distance associated with the angle are an angle and a distance of one of the M locations relative to the reference point, P is an integer greater than or equal to 1, and P is less than or equal to M.

13. The method according to claim 11 or 12, wherein the first information further indicates one or more of detection time of the M beams or SSBs, an ephemeris of an NTN network device corresponding to the M beams or SSBs, an update interval of the first information, a mapping relationship between an SSB and a random access channel occasion RO, and a cell mode of an NTN cell corresponding to the M beams or SSBs.

14. The method according to any one of claims 11 to 13, wherein the second communication apparatus is a terrestrial network TN network device or a TN server.

15. A communication apparatus, comprising a module for performing the method according to any one of claims 1 to 10, or a module for performing the method according to any one of claims 11 to 14.

16. A communication apparatus, comprising a processor, wherein the processor is configured to execute a computer program or instructions, to cause the communication apparatus to perform the method according to any one of claims 1 to 10, or perform the method according to any one of claims 11 to 14.

17. A communication system, comprising a first communication apparatus and a second communication apparatus, wherein the first communication apparatus is configured to perform the method according to any one of claims 1 to 10, and the second communication apparatus is configured to perform the method according to any one of claims 11 to 14.

18. A computer-readable storage medium, storing a computer program or instructions, wherein when the computer program or the instructions are executed by a processor, the method according to any one of claims 1 to 10 is implemented, or the method according to any one of claims 11 to 14 is implemented.

19. A computer program product, wherein the computer program product comprises a computer program or instructions, and when the computer program or the instructions are run on a processor, the processor is caused to perform the method according to any one of claims 1 to 10, or perform the method according to any one of claims 11 to 14.
